(19) Europäisches Patentamt
European Patent Office
Office européen des brevets

(11) **EP 3 605 557 B1**

(12) **EUROPEAN PATENT SPECIFICATION**

(45) Date of publication and mention
of the grant of the patent:
**26.05.2021 Bulletin 2021/21**

(51) Int Cl.:
*H01B 1/22* (2006.01)   *C03C 25/10* (2018.01)
*C03B 37/02* (2006.01)   *C03C 25/16* (2006.01)
*C03C 25/46* (2006.01)

(21) Application number: **18788617.1**

(22) Date of filing: **13.02.2018**

(86) International application number:
**PCT/JP2018/004801**

(87) International publication number:
**WO 2018/193694 (25.10.2018 Gazette 2018/43)**

(54) **ELECTROCONDUCTIVE INORGANIC FILLER**

ELEKTRISCH LEITFÄHIGER ANORGANISCHER FÜLLSTOFF

CHARGE INORGANIQUE ÉLECTROCONDUCTRICE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.04.2017 JP 2017083494**

(43) Date of publication of application:
**05.02.2020 Bulletin 2020/06**

(73) Proprietor: **Central Glass Company, Limited
Yamaguchi 755-0001 (JP)**

(72) Inventors:
• **SAITO, Masanori
Matsusaka-shi
Mie 515-0001 (JP)**
• **ASAKAWA, Yuya
Matsusaka-shi
Mie 515-0001 (JP)**

(74) Representative: **Manitz Finsterwald
Patent- und Rechtsanwaltspartnerschaft mbB
Martin-Greif-Strasse 1
80336 München (DE)**

(56) References cited:
EP-A1- 3 372 727      EP-A2- 0 387 419
JP-A- H01 122 508     JP-A- S60 113 996
JP-A- S61 157 541     JP-A- 2000 336 266
JP-A- 2002 008 438    JP-A- 2017 014 090
US-A- 2 835 221

**Description**

**TECHNICAL FIELD**

The present invention relates to an electroconductive inorganic filler used by being compounded with a resin, and to an electroconductive resin article containing the filler.

**BACKGROUND OF THE INVENTION**

The demand of an article having electric conductivity like a metal material even in a resin article is grown as the replacement of a casing for an electronic apparatus from a metal article to a resin article is advanced. As a method for imparting electric conductivity to the resin material, a method in which electroconductive filler is mixed to the resin article is proposed. In patent documents 1 and 2, as a glass fiber filler, a glass fiber in which the whole or a part of the surface in the longitudinal direction of the fiber is coated with aluminum is proposed. In patent documents 3 to 5, an electroconductive resin article containing glass fiber filler is disclosed, and, as an example, a glass fiber coated with zinc, zinc alloy or the like by a method such as a hot dip plating method, an electroless plating method, a vacuum vapor deposition method or a sputtering method is shown.

In the patent documents 1 and 2, to secure the electric conductivity of the resin article, it is considered to increase the content of the glass fiber, or to make the fiber length of the glass fiber long. In addition, in the patent documents 4 and 5, electroconductive fibers each having a fiber length of 1 mm or 3 mm are mixed to a resin. In addition, in the patent document 3, in resin pellet that is a semi-product of a resin article, the length of the resin pellet in which electroconductive fibers are mixed is adjusted, as a result of which the adjustment of the length of the electroconductive fiber is carried out.

**PRIOR ART DOCUMENT(S)**

**PATENT DOCUMENT(S)**

Patent Document 1: Japanese Examined Patent Application Publication S61-29083
Patent Document 2: Japanese Patent Application Publication S60-113996
Patent Document 3: Japanese Patent Application Publication 2012-236944
Patent Document 4: Japanese Examined Patent Application Publication S63-20270
Patent Document 5: Japanese Examined Patent Application Publication H04-19720

**DISCLOSURE OF THE INVENTION**

**PROBLEM(S) TO BE SOLVED BY THE INVENTION**

The electric conductivity of the resin article in which electroconductive filler is mixed is affected by the shape of electroconductive fiber forming the electroconductive filler and particularly the fiber length thereof. To easily obtain the electric conductivity of the resin article, the filler is preferably formed of electroconductive fibers each having a long fiber length. However, since it is difficult to achieve both of obtaining the long fiber length which makes electroconductive characteristics excellent and easiness of the mixing to the resin, it is difficult to provide practical electroconductive filler.

In view of such a problem, an object of the present invention is to provide an electroconductive filler which is readily mixed into a resin and effectively imparts electric conductivity to the resin.

**MEANS FOR SOLVING THE PROBLEM(S)**

An electroconductive filler of the present invention is formed of powder and granules of a glass fiber, wherein the glass fiber is equipped with a metal coating in a longitudinal direction thereof, wherein the glass fiber has a fiber length distribution, wherein L10 (a fiber length at 10% in a number-basis cumulative distribution) is 20 $\mu$m to 200 $\mu$m, wherein L97 (a fiber length at 97% in a number-basis cumulative distribution) is 400 $\mu$m to 1000 $\mu$m, and wherein a glass fiber mean fiber diameter is 1 to 40 $\mu$m. In addition, the L10 and the L97 are respectively a fiber length at 10% in the number-basis cumulative distribution and a fiber length at 97% in the count-based cumulative distribution calculated from the distribution obtained when 100 or more fibers are measured by observing the outline of each of the fibers placed on a plate by a microscope.

In the measurement of the fiber length, a sample for measuring the fiber length of the glass fiber is used which is prepared by taking a predetermined amount of the powder and granules of the glass fiber from the center part of a lump of the powder and granules of the glass fiber which had sufficiently stirred. The sample is used for observing the outline by a microscope, and the fiber length of each of all fibers observed by the microscope is measured. At the time of the observation by the microscope, if 100 or more fibers cannot be measured, or more than 1000 fibers are measured, the taking of the powder and granules of the glass fiber is carried out again.

In addition, the mean fiber diameter is a value measured according to the B-method described in "7.6 Single fiber diameter" of "Testing methods for textile glass products" in JIS R 3420 (2013). In the present invention, the mean fiber diameter is treated as a value including the metal coating. In addition, in a case where the shape of the fiber is non-circular, or due to the reason that the shape of the glass fiber is non-circular or the metal coating is provided to a part of the glass fiber, the shape of the fiber is non-circular, the cross-sectional area of the fiber is measured in accordance with JIS R 3420, and in a case where the shape of the fiber is circular, the diameter of the cross-sectional area is defined as a mean fiber diameter.

If the L10 is less than 20 $\mu$m, it becomes difficult to obtain the powder and granules in which the L97 is 400 $\mu$m or greater, and in a case where the L10 exceeds 200 $\mu$m, it becomes difficult to mix the filler to a resin. When taking these into consideration, the L10 is preferably 30 $\mu$m to 200 $\mu$m, more preferably 50 $\mu$m to 200 $\mu$m.

In addition, in a case where the L97 is less than 400 $\mu$m, when the filler is mixed to the resin, imparting of electric conductivity to a resin tends to be insufficient. On the other hand, if the L97 exceeds 1000 $\mu$m, the mixing of the filler to a resin becomes difficult. When taking these into consideration, the L97 is preferably 500 $\mu$m to 1000 $\mu$m, more preferably 500 $\mu$m to 700 $\mu$m.

The filler is mixed to a resin material, and then it becomes an electroconductive resin composition. In the electroconductive resin composition, the content of the electroconductive filler in the electroconductive resin is preferably 0.01 to 30 volume %.

In the present description, a glass fiber equipped with a metal coating in the longitudinal direction of the fiber is written as a metal coated glass fiber.

EFFECT(S) OF THE INVENTION

The electroconductive inorganic filler of the present invention is one which is readily mixed into a resin and effectively imparts electric conductivity to the resin.

BRIEF DESCRIPTION OF THE DRAWINGS

FIG. 1 is a drawing schematically showing an electroconductive metal coated glass fiber filler of the present invention.
FIG. 2 is a drawing schematically showing a device for manufacturing a metal coated glass fiber of the present invention.
FIG. 3 is a drawing when enlarging an area A of FIG. 2.

MODE FOR IMPLEMENTING THE INVENTION

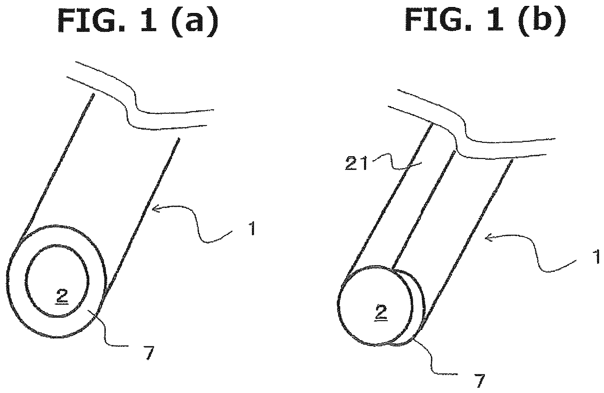

An example of an electroconductive filler composed of glass-fiber powder and granules, and an example of a manufacturing method for the filer of the present invention will be explained with reference to the drawings. FIG. 1 is a drawing schematically showing a metal coated glass fiber forming an electroconductive filler composed of the powder and granules. The metal coated glass fiber is equipped with a glass fiber 2 and a metal coating 7 coating the glass fiber 2 along the longitudinal direction thereof. As shown in FIG. 1 (a), the metal coating 7 may be coated to the whole surface in the longitudinal direction of the glass fiber 2, or, as shown in FIG. 1 (b), the metal coating 7 may be a state of coating a part in the longitudinal direction of the glass fiber, such as a state of coating a half of the peripheral surface of the glass fiber or a state of coating a quarter of the peripheral surface of the glass fiber.

When the metal coating 7 is formed so as to coat the whole surface of the glass fiber, the surface area of the metal coating becomes large and formation of a conduction path by the contact between fillers becomes easier, and thereby electric conductivity of a resin containing the electroconductive filler can be further improved.

In addition, when the metal coating 7 is formed so as to coat a part in the longitudinal direction of the glass fiber 2, a part at which the metal coating is not formed becomes a metal non-coated surface 21 at which the glass fiber is exposed to the surface. In general, it has been known that by providing a silane coupling agent treated layer to a glass fiber, adhesion property with a resin material in a case of being formed into a resin article is improved, as a result of which strength of the resin article can be improved. Therefore, when the silane coupling agent treated layer is provided to the metal non-coated surface 21, the adhesion property between the resin material and the metal coated glass fiber is improved, and thereby strength of the resin article can be improved.

1. Regarding glass fiber 2

The powder and granules of the glass fiber have a fiber length distribution, and L10 (a fiber length at 10% in a number-basis cumulative distribution) is preferably 20 $\mu$m to 200 $\mu$m, and L97 (a fiber length at 97% in the number-basis cumulative distribution) is preferably 400 $\mu$m to 1000 $\mu$m. If approximately 3% of fibers in the number-basis each have a fiber length of 400 $\mu$m or longer, electric conductivity is unexpectedly largely improved, and therefore the measuring of the L97 (the fiber length at 97% in the number-basis cumulative distribution) is carried out.

In addition, the glass fiber mean fiber diameter is preferably 1 to 40 $\mu$m. In a case where the glass fiber mean fiber diameter is less than 1 $\mu$m, productivity at the time of manufacturing deteriorates, because fiber breakage easily occurs. On the other hand, in a case where the glass fiber mean fiber diameter exceeds 40 $\mu$m, it becomes difficult to obtain a target performance, because a surface area per unit weight becomes small and the area of the metal coating becomes small. Therefore, in consideration of the reason of the lower limit side and the upper limit side, the mean fiber diameter may be 2 to 40 $\mu$m, more preferably 3 to 30 $\mu$m.

Although it is preferable that the fiber length and the mean fiber diameter of the glass fiber are within the ranges, there is possibility that a fiber outside the ranges is inevitably mixed with the filler. In particular, there is a case where fine powder in which the fiber length is less than 5 $\mu$m is contained due to the occurrence of breakage of a part of the fiber by a grinding method. Such fine power may be contained to the filler to a degree not impairing the object of the present invention. For example, the filler may contain up to 5 mass % of the fine powder. In addition, fine powder in which the fiber length is less than 5 $\mu$m is not included at the time of the calculation of the L10 (the fiber length at 10% in the number-basis cumulative distribution) and the L97 (the fiber length at 97% in the number-basis cumulative distribution) in the measuring of the fiber length distribution.

As an example of a glass composition of the glass fiber, E-glass, C-glass, S-glass, D-glass, ECR-glass, A-glass and AR-glass can be cited. Among them, in particular, the composition of E-glass or a composition similar to that of E-glass is preferable. Since E-glass has a composition in which an alkali component is small, and it is therefore preferable, because elution of alkali hardly occurs, and influence on the resin material is low.

2. Regarding metal coating 7

The metal coating 7 can be formed by various methods, and for example, it can be formed by a hot dip plating method in which, immediately after the glass fiber is drawn out, it is brought into contact with metal melt. A metal forming the metal coating in this case is preferably a metal having a lower melting point than the softening point of the glass fiber, and for example, pure metals, such as zinc, aluminum, tin and indium, and an alloy containing these metals can be cited. In particular, zinc is preferable because, in a case where zinc is contained in the metal coating, the contact resistance between metal coatings can be low.

In addition, in a case of using an alloy containing zinc for the metal coating, the content of zinc in the alloy is set to 50 mass % or greater. In a case where the content is less than 50 mass %, an effect of zinc for improving contact electric conductivity deteriorates, and in the resin article containing the fiber filler, it becomes difficult to secure sufficient electric conductivity. When taking these into consideration, in the lower limit side of the content of zinc in the alloy, the content of zinc may be 75 mass % or greater, preferably 85 mass % or greater. Although the upper limit of the content of zinc in the alloy is not particularly limited, the upper limited may be 99.999 mass % or less, preferably 99.99 mass % or less.

Moreover, as a metal other than zinc in a case of using the alloy containing zinc for the metal coating, one selected from the group consisting of barium, strontium, calcium, magnesium, beryllium, aluminum, titanium, zirconium, manganese and tantalum can be cited. Among them, as an example of a more preferable metal, aluminum and titanium can be cited.

In the volume ratio of the glass fiber 2 and the metal coating 7, the volume ratio of the glass fiber 2 is preferably 5 to 95 volume %, and the volume ratio of the metal coating 7 is preferably 5 to 95 volume %. In a case where the volume ratio of the glass fiber 2 is less than 5 volume %, the diameter of the glass fiber becomes small, and productivity at the time of manufacturing tends to deteriorate, and in a case where the volume ratio of the glass fiber 2 exceeds 95 volume %, the forming of the metal coating tends to be difficult. When taking these into consideration, the volume ratio of the glass fiber 2 may be 5 to 95 volume % (the volume ratio of the metal coating 7 is 5 to 95 volume %), more preferably 10 to 95 volume % (the volume ration of the metal coating 7 is 5 to 90 volume %).

3. Regarding manufacturing of metal coated glass fiber

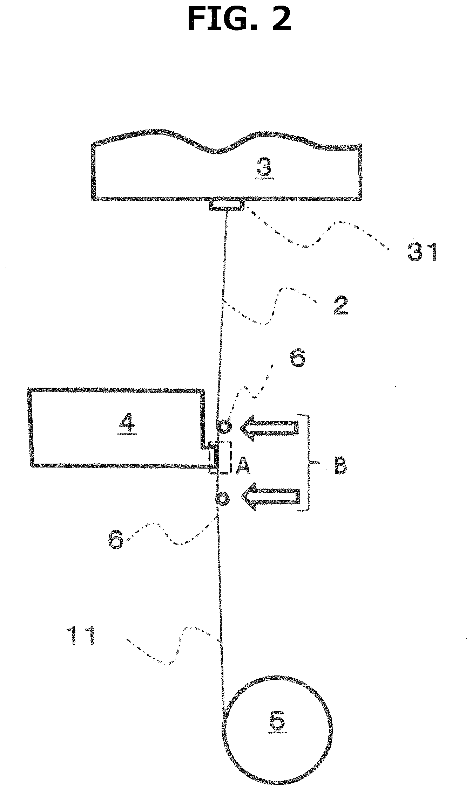

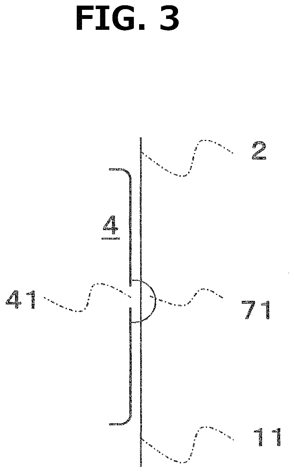

In the following, a specific example of a manufacturing method of the metal coated glass fiber will be explained in detail with reference to the drawings. FIG. 2 is a drawing schematically showing a device for manufacturing a metal coated glass fiber 11. In addition, FIG. 3 is a drawing when enlarging an area A of FIG. 2. A glass fiber 2 drawn out from a bushing nozzle 31 attached to the lower part of a glass melting furnace 3 is wound by a glass fiber winding machine 5. A metal melting furnace 4 for forming the metal coating is disposed between the bushing nozzle 31 and the winding machine 5, and a hole portion 41 for discharging metal melt to the outside is disposed on a side coming in contact with the glass fiber 2 of the metal melting furnace 4. The metal melt oozes from the hole portion 41, and a liquid droplet 71 is formed. By pushing the glass fiber 2 to the metal melting furnace 4 side (direction shown by arrows shown by B in FIG. 2) with a pushing machine 6, the glass fiber 2 is brought into contact with the liquid droplet 71.

<Forming of glass fiber>

The glass fiber 2 is formed in such a manner that glass melt is drawn out from the bushing nozzle 31 attached to the lower part of the glass melting furnace 3 and then is wound by the winding machine 5. As the bushing nozzle 31, one made of platinum or platinum-rhodium alloy can be used. The bushing nozzle 31 having a diameter of approximately 1 to 5 mmφ can be preferably used for discharging the glass melt, and the diameter is appropriately adjusted in accordance with a desired fiber diameter of the glass fiber. Although the temperature of the glass melt in a case of fiberization differs according to the composition of glass, in a case of the composition of E-glass, it is preferable to adjust the temperature at the time when the glass melt passes through the bushing nozzle so as to be 1100°C to 1350°C.

<Regarding melting furnace for metal>

The glass fiber 2 is drawn out from the bushing nozzle 31, and is coated with metal before being wound by the winding machine 5. A metal raw material of the metal coating 7 is melted in the metal melting furnace 4 to form molten metal in the furnace 4, and then the metal melt is discharged from the hole portion 41 equipped to the wall surface of the metal melting furnace 4. If wettability of the region around the hole portion 41 to the metal melt is set to be low, the metal melting, which is discharged from the hole portion 41, can be easily formed to be the liquid droplet 71 having a dome shape. By passing the glass fiber through the inside of this liquid droplet 71, the metal coating 7 is formed to the glass fiber 2. At the time of this coating, if the dome-like droplet 71 is not formed, the metal melt flows without remaining around the hole portion 41. It is therefore preferable that the wettability of the hole portion 41 or the region around the hole portion 41 to the metal melt is low.

To lower the wettability of the hole portion 41 or the region around the hole portion 41 to the metal melt, it is preferable to use ceramic for the hole portion. As an example of ceramic to be used, alumina, zirconia, silicon carbide, boron nitride, silicon nitride and aluminum nitride can be cited. The hole portion 41 can be formed in a circular shape, an oval shape, a rectangular shape, a square shape, a trapezoidal shape or the like. The opening area of the hole portion 41 is preferably 0.75 to 80 mm$^2$. If the opening area is less than 0.75 mm$^2$, the discharging of the metal melt becomes difficult. On the other hand, if the opening area is larger than 80 mm$^2$, the discharging amount of the metal melt becomes too large, and the metal melt flows without remaining around the hole portion 41. When taking these into consideration, the opening area is preferably 3 to 60 mm$^2$. In addition, at the time of the manufacturing of the metal coated glass fiber, there is a case where the glass fiber vibrates in the vertical direction with respect to the advancing direction of the glass fiber 2. To surely carry out the metal coating even in such a case, the hole portion 41 is preferably formed in a rectangular shape or an oval shape such that the length thereof in the vertical direction with respect to the advancing direction of the glass fiber 2 becomes long.

The amount of metal supply from the hole portion 41 can be appropriately adjusted by the distance between the hole portion 41 and the liquid level of the metal melt in the metal melting furnace, or by the viscosity of the metal melt, in addition to the hole shape of the hole portion 41. The more the distance between the hole portion 41 and the liquid level of the metal melt in the metal melting furnace is increased, the more the metal supply amount is increased. On the other hand, the more the distance is reduced, the more the metal supply amount is reduced. Since the viscosity of the metal melt is also largely changed by kinds and composition of the metal, it is preferable to appropriately adjust the metal supply amount.

The material of the outer wall surface of the metal melting furnace 4 with which the liquid droplet 71 comes in contact can be appropriately selected from ceramic, metal, glass and a carbon in accordance with the temperature of the metal to be melted. In a case of using ceramic, alumina, zirconia, silicon carbide, boron nitride, silicon nitride and aluminum nitride can be cited.

The metal melting furnace 4 can be appropriately heated by using a heater. It is necessary to set the temperature inside the metal melting furnace to be higher than the melting point of the metal to be melted.

In addition, if the heating temperature of the metal melting furnace is set to a high temperature, the adhesion between the glass fiber 2 and the metal coating 7 tends to be improved (reason 1).

However, if the heating temperature of the melting furnace is set to an excessively high temperature, sludge is easily generated to the upper surface of molten metal depending on the composition of the metal, and productivity of the metal coated glass fiber deteriorates (reason 2).

Moreover, it becomes necessary to prepare a material having heat resistance for the metal melting furnace, and consequently, the metal melting furnace becomes expansive (reason 3). Therefore, it is not preferable to set the heating temperature of the metal melting furnace to an excessively high temperature. When taking these reasons 1 to 3 into consideration, the temperature of the metal melting furnace is preferably 400 to 1000°C. In addition, due to the reasons 2 and 3, since it is not preferable to set the temperature of the metal melting furnace to an excessively high temperature, the upper limit of the temperature of the metal melting furnace may be 850°C, preferably 750°C, more preferably 600°C, further preferably 550°C. If the temperature of the metal melting furnace is low, it takes much time to melt the metal as a raw material. Therefore, the lower limit of the temperature range of the metal melting furnace may be 450°C.

In addition, if the molten metal contains, for example, aluminum and titanium, sludge is hardly generated to the upper surface of the molten metal even if the temperature in the metal melting furnace is set to a high temperature because a passive state film is formed on the upper surface of the molten metal, and thereby the electroconductive filler can be easily produced. From this viewpoint, the metal coating 7 preferably contains at least one selected from the group consisting of aluminum and titanium. In a case where the metal coating 7 contains at least one selected from the group consisting of aluminum and titanium, to further enhance the adhesion with the glass fiber, the temperature in the metal melting furnace may be 600 to 800°C in consideration with the reason 1.

<Regarding metal coating to glass fiber>

The glass fiber 2 is wound by the winding machine 5, and then passing through the side of the metal melting furnace 4. By pushing the glass fiber 2 against the liquid droplet 71 of the metal melting furnace 4, the metal coating 7 is formed to the glass fiber. At this time, the pushing machine 6 is moved to move the glass fiber 2 toward the metal melting furnace 4 (direction shown by arrows shown by B in FIG. 2) such that the glass fiber 2 is pushed in the center direction of the liquid droplet 71, or the metal melting furnace 4 is moved in the direction of the glass fiber 2 such that the glass fiber 2 is pushed in the center direction of the liquid droplet 71.

Since the amount of the metal melt per unit of time required for the metal coating to the glass fiber changes depending on the fiber diameter of the glass fiber (R : $\mu$m), the thickness of the metal coating (t: $\mu$m), winding speed (s : m/minute) and the specific gravity of the metal to be coated (p : g/cm$^3$), the supply amount of the metal (M : g/minute) to be supplied to the hole portion 41 can be estimated by the following formula (i).

$$M = (R \times t \times \pi \times s \times p) \times 10 - 6 \qquad (i)$$

For example, in a manufacturing condition of the glass fiber coated with zinc such that the thickness of a metal coating is 1.0 $\mu$m, an ideal metal supply amount in a case where the diameter of the glass fiber is 28 $\mu$m and the winding speed is 290 m/minute is 0.18 g/minute by the formula (i). However, to stably carry out the metal coating for a long time, the metal supply amount tends to become larger than that obtained by the calculation.

The speed of the glass fiber 2 when passing through the side of the metal melting furnace 4 can be adjusted by the winding speed of the winding machine 5, and that speed is preferably 100 to 5000 m/minute. The winding speed is determined from the viewpoint of the shape design of the metal coated glass fiber, because the winding speed also affects the fiber diameter. If the glass fiber is drawn at a winding speed lower than a winding speed of 100 m/minute, the fiber diameter becomes larger than 40 $\mu$m. On the other hand, if the glass fiber is drawn at a winding speed higher than a winding speed of 5000 m/minute, fiber breakage frequently occurs, and productivity at the time of the manufacturing deteriorates.

In a case of using the pushing machine 6, the initial positions of the pushing machine 6 and the glass fiber 2 are separated from each other, and the pushing machine 6 includes a moving mechanism, such that by moving the pushing machine 6, the passing position of the glass fiber 2 is adjusted so as to come in contact with the dome-like liquid droplet 71 formed on the hole portion 41. The pushing machine is provided to set the passing position of the glass fiber, and includes the moving mechanism which can be stably operated. A member of the pushing machine is not particularly limited if the member having heat resistance and a smooth surface is used.

As the moving mechanism of the pushing machine, for example, a stage equipped with a fine adjustment mechanism with two or more shafts, and a robot equipped with a moving mechanism with two or more shafts can be cited. As the member which has heat resistance and a smooth surface, for example, ceramic, graphite, and a metal whose surface is polished can be cited. The member whose surface is smooth allows the glass fiber 2 to pass therethrough at the time of the starting of drawing the glass fiber 2. In addition, the member serves as a guide which is capable of fixing the positional relation between the glass fiber 2 and the liquid droplet 71 formed on the hole portion 41 at the time of the metal coating. Therefore, as a form of the member whose surface is smooth, an article having a hole and a comb-shaped article, or forms such as a stick shape and a plate shape having a groove can be appropriately used.

As a shape of the article having a hole, a circular shape, an oval shape, a rectangular shape, a square shape and a trapezoidal shape can be available. In addition, a groove formed by cutting a part of the edge of the hole may be used. In addition, the opening area of the hole of the article is preferably 0.2 to 20 mm$^2$. If the opening area is smaller than 0.2 mm$^2$, the passing of the glass fiber 2 through the hole at the time of the starting of the drawing fiber becomes difficult. On the other hand, if the opening area of the hole is larger than 20 mm$^2$, the passing position of the glass fiber 2 is changed easily, and it becomes difficult to fix the positional relation between the glass fiber 2 and the liquid droplet 71 of the metal melt. When taking these into consideration, the opening area is preferably 0.8 to 7 mm$^2$.

The length of a tooth of the comb-shaped article is preferably 0.1 to 100 mm. If the length of the tooth is shorter than 0.1 mm, it is difficult to guide the path of the glass fiber, and if the length is longer than 100 mm, it is not preferable because the tooth is broken easily. When taking these into consideration, the length of the tooth is preferably 1 to 100 mm. In addition, when the comb-shaped article is used as the pushing machine, the guiding of the paths of a plurality of glass fibers also becomes easy.

The pushing machine can be provided not only on the lower side of the metal melting furnace 4 but also on the upper side thereof. The pushing machine may be provided on one side of the upper and lower sides or may be provided on the both upper and lower sides. In particular, in a case where the pushing machine is provided on the both upper and lower sides, it is more preferable because the glass fiber can be accurately pushed to the liquid droplet 71.

In addition, the formation of the metal coating to the glass fiber may be carried out by a method other than the hot dip plating method explained above. As a method for forming the metal coating to the glass fiber other than the hot dip plating method, an electroless plating method, a silver mirror reaction method, and a CVD method can be cited.

<Preparation of electroconductive filler from metal coated glass fiber>

By cutting a metal coated glass fiber strand to a predetermined length which is formed by arranging a plurality of metal coated glass fibers in parallel, chopped strands of the metal coated glass fibers, each of which has a fiber length of 1 to 100 mm, can be obtained. Moreover, by crushing the chopped strands of the metal coated glass fibers, conductive filler powder and granules can be prepared.

As a cutting method of the metal coated glass fibers, a known cutting method of glass fibers by using a cutting machine can be used. In addition, instead of the winding machine 5, by using a direct chopper, the chopped strands of the metal coated glass fibers may be formed by cutting the metal coated glass fibers in on line while carrying out drawing. The fiber length of the chopped strand is preferably 1 to 100mm. In a case where the fiber length of the chopped strand is less than 1 mm, it becomes difficult to set the L97 (the fiber length at 97% in the number-basis cumulative distribution) to 400 $\mu$m to 1000 $\mu$m, in a fiber length distribution in the powder and granules of the electroconductive filler. On the other hand, in a case where the fiber length exceeds 100 mm, there is a case where the crushing after the cutting takes much time. When taking these into consideration, the fiber length of the chopped strand may be 1 mm to 50mm or 2 mm to 10 mm.

The metal coated glass fiber strand may be one in which a plurality of the metal coated glass fibers are sized. A sizing agent for the strand is composed of a resin, a silane coupling agent, a surface active agent, a pH adjusting agent, an organic solvent and/or water, and the sizing can be carried out by using a known sizing agent. When the sized metal coated glass fibers 1 is cut, fluffing and fraying of fiber hardly occur, and thereby efficiency of cutting processing is improved. The sizing of the metal coated glass fibers in this case may be carried out in on line during the drawing, or may be carried out in off line after the drawing. In addition, to carry out the crushing after the cutting, the cut metal coated glass fibers may not have quality which satisfies "a chopped strand as a product", may have different length from each other due to rough cutting, or may be ones in which fluffing and fraying occur.

The chopped strands of the cut metal coated glass fibers are further crushed to form powder and granules of the electroconductive filler. As a crushing method of the chopped strands of the metal coated glass fibers, a known crushing method in which the crushing is carried out by using a ball mill, a cutter mill, a hammer mill, a jet mill or a mortar can be used to crush the chopped strands. In the electroconductive filler of the present invention, L10 (a fiber length at 10% in the number-basis cumulative distribution) is preferably 20 $\mu$m to 150 $\mu$m, and L97 (a fiber length at 97% in the number-basis cumulative distribution) is preferably 400 $\mu$m to 1000 $\mu$m. The chopped strands can be crushed such that the fiber length is in these ranges by appropriately setting conditions.

Moreover, the powder and granules of the electroconductive filler obtained by the crushing may be classified in order to remove fine powder or in order to obtain a target fiber length distribution. The classifying can be carried out by using a known classifying method, such as dry classification carried out by using a sieve in the air or wet classification carried out in water or in an organic solvent. In a case of carrying out the dry classification, the degree of roughness of the sieve can be appropriately selected. In addition, the process for crushing the chopped strands may be one which carries out the crushing while being mixed with the after-mentioned resin material.

The electroconductive filler may be substantially one composed of powder and granules of glass fibers, or one derived from the metal coated glass fibers.

4. Regarding resin article having electroconductive filler

An electroconductive filler can be formed as an electroconductive resin article by being compounded (mixed) with a resin material. As the resin material to be compounded with the electroconductive filler, a known resin can be used. For example, thermoplastic resins, such as low density polyethylene, high density polyethylene, polypropylene, polyvinyl chloride, polystyrene, polyvinyl acetate, a methacrylic resin, an ABS resin, a metallocene resin, polyamide, polyacetal, a polycarbonate, polyphenylene ether, polyethylene terephthalate, polybutylene terephthalate, liquid crystal polymer, polyphenylene sulfide, polyimide, polyether sulfone, polyether ether ketone and a fluororesin, thermosetting resins, such as an epoxy resin, a silicone resin, a phenol resin, an unsaturated polyester resin and polyurethane, rubber, and elastomer can be cited.

In addition, in order to adjust viscosity, thickener, such as cellulose, glucose and gelatin, organic solvents, such as acetone, methyl ethyl ketone, methyl isobutyl ketone, ethanol, isopropyl alcohol, normal propyl alcohol, butanol, ethyl acetate, butyl acetate, xylene and toluene, or water may be added to the resin. Moreover, 0.01 to 30 volume % of the electroconductive filler may be contained in the electroconductive resin article. Since the electroconductive filler of the present invention has high electric conductivity when being compounded with the resin, the content of the electroconductive fiber filler may be 10 volume %, preferably 7 volume %.

The electric conductivity of the electroconductive filler of the present invention can be evaluated in such a manner that a filling material formed of filler is formed by filling the filler into the inside of an insulation container having a specific size, and then electrodes of a tester are inserted into the filling material. As mentioned below in Examples, for example, the electroconductive filler is measured and inserted into a cylindrical container made of an insulation material whose diameter is 17 mm and height is 4 mm such that the volume of the filler becomes 200 mm$^3$, so as to fill the container with the filler. Then, the electrodes of the tester are inserted to the filling material of the electroconductive filler in the cylindrical container such that the interval therebetween becomes 17 mm, and then the electric conductivity is evaluated by measuring the electric resistance of the filling material. The filling material in this example is one for simulating a case where the content of the electroconductive filler in the resin article is 22 volume %.

A known kneading method and device can be used for the compounding of the electroconductive filler with the resin according to the characteristics of the resin to be compounded. If the resin is a thermoplastic resin, it is preferable to use a heat-melting type kneading machine, and a kneader or a mixer equipped with a heating apparatus, such as a single shaft kneading machine, a two-shaft kneading machine, a single shaft kneading extruder or a two-shaft kneading extruder, can be also used. The electroconductive resin article in which the electroconductive filler is kneaded with the resin can be formed by using a known forming method, according to the characteristics and the shape of the compound. If the resin is a thermoplastic resin, an injection molding method and a blow molding method can be cited, and if the resin is a thermosetting resin, a hand lay-up method, a spray-up method, a pultrusion method, a SMC method, a BMC method and a transfer molding method can be cited.

The molded complex (electroconductive resin article containing electroconductive filler) can be used for various uses as a resin conducting electricity. If the electroconductive filler is compounded with the thermosetting resin or a resin having humid effectivity, and is used as adhesive, it can be used as electroconductive adhesive which substitutes for solder. In addition, if the complex is used as parts or casings for vehicles and electronic apparatus for which electromagnetic shielding performance is required, electromagnetic waves are shielded, and thereby interference and malfunction of apparatus caused by electromagnetic wave noise and an effect on health caused by electromagnetic waves can be suppressed.

## EXAMPLES

In the following, although the present invention will be more specifically explained with Examples and Comparative Examples, the present invention is not limited to these.

(1) Preparation of electroconductive filler

A metal coated glass fiber was prepared by the device explained in FIG. 2 and FIG. 3. Each metal was mixed so as to become a predetermined metal composition, and molten metal of an alloy was formed in a metal melting furnace under 700°C atmosphere, following which "a liquid droplet of metal melt" was formed through "a hole portion for discharging the metal melt". A glass having an E-glass composition was melted at 1250°C in a glass melting furnace. A glass fiber was drawn out from a nozzle and was wound while adjusting the speed of a winding machine to be 1000 m/minute, and by bringing the glass fiber into contact with "the droplet of the metal melt", a metal coated glass fiber was prepared. In each of Examples 1 to 4, the composition of a metal coating was adjusted so as to be an alloy of 99.5 mass % of zinc and 0.5 mass % of aluminum. In each of Example 5 and Comparative Example 1, the composition of the metal coating was adjusted so as to be an alloy of 99.5 mass % of zinc and 0.5 mass % of titanium.

After three thousands metal coated glass fibers were arranged in parallel and sized, by using a cutting machine, chopped strands of the metal coated glass fibers each having a length of 6 mm were prepared. By using the obtained chopped strands, the mean fiber length of the glass fibers each equipped the metal coating in the longitudinal direction thereof and the volume % of the glass fiber and the metal coating were measured by the after-mentioned evaluation method (2). The chopped strands were manually crushed by using a pestle and a mortar, and by a classification operation, an electroconductive filler of each of Examples 1 to 5 and Comparative Example 1 which has various physical properties shown in Table 1 was obtained. The various physical properties were evaluated by the following methods (2), (3) and (4).

[Table 1]

| | Fiber diameter /$\mu$m | Composition of glass coating | Metal/Ratio of glass/ Volume % | | Fiber length distribution /$\mu$m | | Resistance /$\Omega$ |
|---|---|---|---|---|---|---|---|
| | | | Metal coating | Glass fiber | L10 | L97 | |
| Example 1 | 20 | Zn/Al | 70 | 30 | 77.4 | 553.9 | < 5 |
| Example 2 | 20 | Zn/Al | 70 | 30 | 51.6 | 461.4 | 30 |
| Example 3 | 20 | Zn/Al | 70 | 30 | 82.0 | 559.3 | < 5 |
| Example 4 | 20 | Zn/Al | 70 | 30 | 118.5 | 587.6 | <5 |
| Example 5 | 20 | Zn/Ti | 50 | 50 | 60.4 | 587.3 | < 5 |
| Comparative Example 1 | 20 | Zn/Ti | 50 | 50 | 54.7 | 296.9 | > $10^6$ |

(2) Evaluation of mean fiber diameter of glass fiber equipped with metal coating and ratio of glass fiber to metal coating, which forms electroconductive filler

In the prepared electroconductive filler, the mean fiber diameter was measured in accordance with the B-method described in "7.6 Single fiber diameter" of "Testing methods for textile glass products" in JIS R 3420 (2013). The chopped strands of the glass fibers each equipped with the metal coating before the crushing were solidified with a cold mounting resin (Marumoto Struers, EpoFix) and then the cutting surface thereof was polished, following which the obtained polished surface was observed with an optical microscope.

Twenty five fibers were chosen at random, and from the obtained microscope image, the diameter of each of the glass fibers each containing the metal coating was measured to calculate a mean value, and the calculated mean value was defined as a mean fiber diameter of the metal coated glass fibers. In addition, in the same manner, from the microscope image, the area of each of the metal coating and the glass fiber was measured, and a volume % of each of them was calculated.

(3) Evaluation of fiber length of glass fiber equipped with metal coating, which forms electroconductive filler

The prepared electroconductive filler was placed on a metal plate, and a microscope image in a range of 2 mm × 2.8 mm was obtained by an optical microscope. In the fibers inside the obtained image, the fiber length of each of the fibers was measured. When the number of the fibers whose lengths were measured was 100 or more to 1000 or lower, it was deemed to be effective. The fibers were arranged in the order of the length of the fibers, and the maximum fiber length at a point including 10% of the fiber number from the short length side was defined as L10 (a fiber length at 10% in a number-basis cumulative distribution), and the maximum fiber length at a point including 97% of the fiber number from the short length side was defined as L97 (a fiber length at 97% in the number-basis cumulative distribution).

(4) Evaluation of electric conductivity of electroconductive filler

The electroconductive filler was measured and inserted into a cylindrical container made of an insulation material having a diameter of 17 mm and a height of 4 mm, such that a filler volume became 200 mm$^3$, and the container was filled with the filler. The filling of the electroconductive filler to the cylindrical container is one for simulating a case where the content of the electroconductive filler in a resin article is 22 volume %. Electrodes of a tester were inserted into a filling material of the electroconductive filler such that the interval therebetween becomes 17 mm, and the electric conductivity was evaluated by measuring the electric resistance of the filling material.

In the present evaluation, if one has a condition in which the electric resistance is less than 50 Ω, it can be considered as an excellent electroconductive filler. Moreover, if one has a condition in which the electric resistance is less than 10 Ω, it can be considered as a further excellent electroconductive filler.

In the present Examples, it was confirmed that the electroconductive filler of each of Examples 1 to 5 had excellent electric conductivity. In particular, it was confirmed that the electroconductive filler of each of Examples 1 and 3 to 5 had excellent electric conductivity.

EXPLANATION OF SIGNS

1: Metal coated glass fiber filler
11: Metal coated glass fiber
2: Glass fiber
21: Metal non-coated surface
3: Glass melting furnace
31: Bushing nozzle
4: Metal melting furnace
41: Hole portion for discharging metal melt to outside
5: Winding machine
6: Pushing machine
7: Metal coating
71: Liquid droplet of metal melt

**Claims**

1.  An electroconductive filler comprising:

    powder and granules of a glass fiber,
    wherein the glass fiber is equipped with a metal coating in a longitudinal direction thereof,
    wherein the glass fiber has a fiber length distribution,
    wherein L10 (a fiber length at 10% in a number-basis cumulative distribution) is 20 μm to 200 μm,
    wherein L97 (a fiber length at 97% in a number-basis cumulative distribution) is 400 μm to 1000 μm, and
    wherein a glass fiber mean fiber diameter which is obtained by B-method of JIS R 3420 (2013) is 1 to 40 μm.

2.  The electroconductive filler according to claim 1, wherein in the fiber length distribution of the glass fiber, the L97 (the fiber length at 97% in the number-basis cumulative distribution) is 500 μm to 1000 μm.

3.  The electroconductive filler according to claim 1 or 2, wherein the glass fiber is composed of an E-glass composition.

4.  The electroconductive filler according to any of claims 1 to 3, wherein the metal coating contains zinc.

5.  The electroconductive filler according to any of claims 1 to 4, wherein in volume %, the glass fiber is 5 to 95%, and the metal coating is 5 to 95%.

6.  An electroconductive resin composition comprising:

    the electroconductive filler according to any of claims 1 to 5; and
    a resin material,
    wherein 0.01 to 30 volume % of the electroconductive filler is contained in the electroconductive resin composition.

7.  A method for manufacturing the electroconductive filler according to any of claims 1 to 5, comprising the steps of:

    preparing a chopped strand composed of a glass fiber equipped with a metal coating in a longitudinal direction of the glass fiber; and
    crushing the chopped strand,
    wherein a length of the chopped strand is 1 mm to 100 mm.


**Patentansprüche**

1.  Elektrisch leitfähiger Füllstoff, welcher umfasst:

    Pulver und Granulat einer Glasfaser,
    wobei die Glasfaser in einer Längsrichtung ihrer selbst mit einer Metallbeschichtung ausgestattet ist,
    wobei die Glasfaser eine Faserlängenverteilung aufweist,
    wobei L10 (eine Faserlänge bei 10% in einer zahlenbasierten kumulativen Verteilung) 20 μm bis 200 μm beträgt,
    wobei L97 (eine Faserlänge bei 97% in einer zahlenbasierten kumulativen Verteilung) 400 μm bis 1000 μm beträgt, und
    wobei ein mittlerer Glasfaserdurchmesser, der durch das B-Verfahren von JIS R 3420 (2013) erhalten ist, 1 bis 40 μm beträgt.

2.  Elektrisch leitfähiger Füllstoff nach Anspruch 1, wobei in der Faserlängenverteilung der Glasfaser die L97 (die Faserlänge bei 97% in der zahlenbasierten kumulativen Verteilung) 500 μm bis 1000 μm beträgt.

3.  Elektrisch leitfähiger Füllstoff nach Anspruch 1 oder 2, wobei die Glasfaser aus einer E-Glas-Zusammensetzung zusammengesetzt ist.

4.  Elektrisch leitfähiger Füllstoff nach einem der Ansprüche 1 bis 3, wobei die Metallbeschichtung Zink enthält.

5.  Elektrisch leitfähiger Füllstoff nach einem der Ansprüche 1 bis 4, wobei, in Volumen-%, die Glasfaser 5 bis 95% ist und die Metallbeschichtung 5 bis 95% ist.

6.  Elektrisch leitfähige Harz-Zusammensetzung, welche umfasst:

    den elektrisch leitfähigen Füllstoff nach einem der Ansprüche 1 bis 5; und
    ein Harzmaterial,
    wobei 0,01 bis 30 Volumen-% des elektrisch leitfähigen Füllstoffes in der elektrisch leitfähigen Harz-Zusammensetzung enthalten ist.

7.  Verfahren zur Fertigung des elektrisch leitfähigen Füllstoffes nach einem der Ansprüche 1 bis 5, welches die Schritte umfasst:

    Herstellen eines geschnittenen Stranges, der aus einer Glasfaser zusammengesetzt ist, die in einer Längsrichtung der Glasfaser mit einer Metallbeschichtung ausgestattet ist; und
    Zerkleinern des geschnittenen Stranges,
    wobei eine Länge des geschnittenen Stranges 1 mm bis 100 mm beträgt.


**Revendications**

1.  Charge électroconductrice comprenant :

    une poudre et des granulés d'une fibre de verre,
    dans laquelle la fibre de verre est équipée d'un revêtement métallique dans sa direction longitudinale,
    dans laquelle la fibre de verre présente une distribution des longueurs de fibre,
    dans laquelle L10 (une longueur de fibre à 10 % dans une distribution cumulative basée sur la numération) est de 20 μm à 200 μm,
    dans laquelle L97 (une longueur de fibre à 97 % dans une distribution cumulative basée sur la numération) est

de 400 μm à 1000 μm et
dans laquelle un diamètre de fibre moyen de fibre de verre qui est obtenu par la méthode B de JIS R 3420 (2013) est de 1 à 40 μm.

2. Charge électroconductrice selon la revendication 1, dans laquelle, dans la distribution des longueurs de fibre de la fibre de verre, la L97 (la longueur de fibre à 97 % dans la distribution cumulative basée sur la numération) est de 500 μm à 1000 μm.

3. Charge électroconductrice selon la revendication 1 ou 2, dans laquelle la fibre de verre est composée d'une composition de verre E.

4. Charge électroconductrice selon l'une quelconque des revendications 1 à 3, dans laquelle le revêtement métallique contient du zinc.

5. Charge électroconductrice selon l'une quelconque des revendications 1 à 4, dans laquelle, en % en volume, la fibre de verre est de 5 à 95 %, et le revêtement métallique est de 5 à 95 %.

6. Composition de résine électroconductrice comprenant :

   la charge électroconductrice selon l'une quelconque des revendications 1 à 5 ; et
   un matériau de résine,
   dans laquelle 0,01 à 30 % en volume de la charge électroconductrice sont contenus dans la composition de résine électroconductrice.

7. Procédé de fabrication de la charge électroconductrice selon l'une quelconque des revendications 1 à 5, comprenant les étapes consistant à :

   préparer un brin coupé composé d'une fibre de verre équipée d'un revêtement métallique dans une direction longitudinale de la fibre de verre ; et
   écraser le brin coupé,
   dans lequel une longueur du brin coupé est de 1 mm à 100 mm.

# FIG. 1 (a)

# FIG. 1 (b)

# FIG. 2

# FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6129083 B
- JP S60113996 B
- JP 2012236944 A
- JP S6320270 B
- JP H0419720 B